# EUROPÄISCHE PATENTANMELDUNG

(11) **EP 3 698 883 A1**
(43) Veröffentlichungstag der Anmeldung: **26.08.2020**
(21) Anmeldenummer: 20170345.1
(22) Anmeldetag: 01.12.2017
(51) Int. Cl.: B05B 1/30, B05B 13/04, B05B 1/14

(54) **DRUCKKOPF ZUR APPLIKATION EINES BESCHICHTUNGSMITTELS AUF EIN BAUTEIL**

(30) Priorität: 14.12.2016 DE 102016014946
(62) Teilanmeldung aus: 17808446.3
(71) Anmelder: Dürr Systems AG, 74321 Bietigheim-Bissingen (DE)
(72) Erfinder: Fritz, Hans-Georg, 73760 Ostfildern (DE); Wöhr, Benjamin, 74363 Eibensbach (DE); Kleiner, Marcus, 74354 Besigheim (DE); Bubek, Moritz, 71640 Ludwigsburg (DE); Beyl, Timo, 74354 Besigheim (DE); Herre, Frank, 71739 Oberriexingen (DE); Sotzny, Steffen, 71720 Oberstenfeld (DE)
(74) Vertreter: v. Bezold & Partner Patentanwälte - PartG mbB

(57) **Zusammenfassung**

Die Erfindung betrifft einen Druckkopf zur Applikation eines Beschichtungsmittels auf ein Bauteil, insbesondere zur Applikation eines Lacks auf ein Kraftfahrzeugkarosseriebauteil, mit mindestens einer Auslassöffnung (1-3) zur Abgabe des Beschichtungsmittels, einer Beschichtungsmittelzuführung (21) zur Zuführung des Beschichtungsmittels zu der Auslassöffnung (1-3), mit einem beweglichen Ventilelement (13-15), das zwischen einer Öffnungsstellung und einer Schließstellung beweglich ist, wobei das Ventilelement (13-15) in der Schließstellung die Auslassöffnung (1-3) verschließt, wohingegen das Ventilelement (13-15) in der Öffnungsstellung die Auslassöffnung (1-3) freigibt, sowie mit einem Ventilantrieb (7-15) zum Bewegen des Ventilelements (13-15) zwischen der Öffnungsstellung und der Schließstellung. Die Erfindung sieht zusätzliche eine flexible Membran (19) vor, die den Ventilantrieb von der Beschichtungsmittelzuführung (21) trennt, wobei die Membran (19) mit ihrer Antriebsseite dem Ventilantrieb (7-15) zugewandt ist und mit ihrer Beschichtungsmittelseite dem Beschichtungsmittel in der Beschichtungsmittelzuführung (21) ausgesetzt ist.

## Beschreibung

Die Erfindung betrifft einen Druckkopf zur Applikation eines Beschichtungsmittels auf ein Bauteil, insbesondere zur Applikation eines Lacks auf ein Kraftfahrzeugkarosseriebauteil.

Zur Serienlackierung von Kraftfahrzeugkarosseriebauteilen werden als Applikationsgerät üblicherweise Rotationszerstäuber eingesetzt, die jedoch den Nachteil eines beschränkten Auftragswirkungsgrades haben, d.h. nur ein Teil des applizierten Lacks lagert sich auf den zu beschichtenden Bauteilen ab, während der Rest des applizierten Lacks als sogenannter Overspray entsorgt werden muss.

Eine neuere Entwicklungslinie sieht dagegen als Applikationsgerät sogenannte Druckköpfe vor, wie sie beispielsweise aus DE 10 2013 002 412 A1, US 9,108,424 B2 und DE 10 2010 019 612 A1 bekannt sind. Derartige Druckköpfe geben im Gegensatz zu den bekannten Rotationszerstäubern keinen Sprühnebel des zu applizierenden Lacks ab, sondern einen räumlich eng begrenzten Lackstrahl, der sich nahezu vollständig auf dem zu lackierenden Bauteil niederschlägt, so dass nahezu kein Overspray entsteht.

Bei den bekannten Druckköpfen wird das zu applizierende Beschichtungsmittel (z.B. Lack) durch eine Düse ausgestoßen, wobei die Düse von einer verschiebbaren Ventilnadel geschlossen bzw. geöffnet werden kann. Der mechanische Antrieb der Ventilnadel kann hierbei durch einen Magnetaktor erfolgen, der die Ventilnadel verschiebt und dadurch die Düse entweder verschließt oder freigibt.

Nachteilig an diesen bekannten Druckköpfen ist die Tatsache, dass der Ventilantrieb einschließlich der Ventilnadel dem zu applizierenden Beschichtungsmittel ausgesetzt ist. Zum einen kann dies zu Beschichtungsmittelablagerungen an dem Ventilantrieb führen, wodurch im schlimmsten Fall Funktionsstörungen entstehen können. Zum anderen ist dies aber auch bei einem Farbwechsel problematisch, wenn nacheinander verschiedenartige Beschichtungsmittel appliziert werden sollen, da die herkömmliche Konstruktion die Spülung des Druckkopfs erschwert.

Zum technischen Hintergrund der Erfindung ist auch hinzuweisen auf DE 10 2014 012 705 A1 und DE 10 2007 037 663 A1.

Der Erfindung liegt deshalb die Aufgabe zugrunde, einen entsprechend verbesserten Druckkopf zu schaffen.

Diese Aufgabe wird durch einen erfindungsgemäßen Druckkopf gemäß dem Hauptanspruch gelöst.

Der erfindungsgemäße Druckkopf dient zur Applikation eines Beschichtungsmittels (z.B. Lack, Klebstoff, Primer, Dichtmittel, etc.) auf ein Bauteil. Vorzugsweise ist der Druckkopf so ausgebildet, dass er einen Lack auf ein Kraftfahrzeugkarosseriebauteil applizieren kann. Der im Rahmen der Erfindung verwendete Begriff eines Druckkopfs ist allgemein zu verstehen und dient im Wesentlichen nur zur Abgrenzung gegenüber herkömmlichen Zerstäubern, die keinen räumlich scharf abgegrenzten Beschichtungsmittelstrahl abgeben, sondern einen Sprühnebel des Beschichtungsmittels. Derartige Druckköpfe sind an sich auch bereits aus dem Stand der Technik bekannt und müssen deshalb nicht weiter beschrieben werden. Lediglich beispielhaft wird jedoch auf die bereits vorstehend zitierten Druckschriften US 9,108,424 B2, DE 10 2010 019 612 A1 und DE 10 2013 002 412 A1 hingewiesen, die derartige Druckköpfe prinzipiell beschreiben.

Der erfindungsgemäße Druckkopf weist mindestens eine Auslassöffnung auf, um das Beschichtungsmittel auszugeben. In einem bevorzugten Ausführungsbeispiel der Erfindung handelt es sich bei dieser Auslassöffnung um die Düsenöffnung des Druckkopfs, durch die ein Beschichtungsmittelstrahl des Beschichtungsmittels abgegeben wird. Es besteht jedoch im Rahmen der Erfindung auch die Möglichkeit, dass es sich bei der Auslassöffnung um eine andere Auslassöffnung stromaufwärts vor der eigentlichen Düsenöffnung handelt.

Darüber hinaus weist der erfindungsgemäße Druckkopf in Übereinstimmung mit dem Stand der Technik eine Beschichtungsmittelzuführung auf, um das zu applizierende Beschichtungsmittel der Auslassöffnung zuzuführen.

Ferner enthält der erfindungsgemäße Druckkopf in Übereinstimmung mit dem Stand der Technik ein bewegliches Ventilelement (z.B. Ventilnadel), das zwischen einer Öffnungsstellung und einer Schließstellung beweglich ist, wobei das Ventilelement in der Schließstellung die Auslassöffnung verschließt, wohingegen das bewegliche Ventilelement in der Öffnungsstellung die Auslassöffnung freigibt.

Weiterhin umfasst der erfindungsgemäße Druckkopf in Übereinstimmung mit dem Stand der Technik einen Ventilantrieb zum Bewegen des Ventilelements zwischen der Öffnungsstellung und der Schließstellung. Hinsichtlich der konstruktiven Gestaltung des Ventilantriebs bestehen im Rahmen der Erfindung verschiedene Möglichkeiten, die noch detailliert beschrieben werden. So kann es sich bei dem Ventilantrieb beispielsweise um einen Magnetaktor, einen Fluidantrieb (pneumatisch oder hydraulisch) oder auch um einen Piezoaktor handeln, um nur einige Beispiele zu nennen.

Der erfindungsgemäße Druckkopf zeichnet sich nun gegenüber den eingangs beschriebenen herkömmlichen Druckköpfen durch eine flexible Membran aus, die den Ventilantrieb von der Beschichtungsmittelzuführung trennt, wobei die Membran mit ihrer Antriebsseite dem Ventilantrieb zugewandt ist und mit ihrer Beschichtungsmittelseite dem Beschichtungsmittel in der Beschichtungsmittelzuführung ausgesetzt ist.

Das zu applizierende Beschichtungsmittel berührt also in der Beschichtungsmittelzuführung nur die Beschichtungsmittelseite der flexiblen Membran, nicht dagegen den Ventilantrieb, der somit vor einer Einwirkung des Beschichtungsmittels geschützt ist. Bei dem erfindungsgemäßen Druckkopf wird also der Ventilantrieb von dem medienführenden Bereich getrennt, was vorteilhaft ist.

Durch diese Trennung werden nämlich Ablagerungen im Antriebsbereich (z.B. an Ventilnadeln, Kolben, im Innenrohr einer Spule, etc.) vermieden. Dadurch wird die Funktion des Drucckopfs aufrechterhalten und Reinigungs-, Spül- und Instandhaltungsintervalle können verlängert werden.

Ein weiterer Vorteil besteht in der wesentlich verbesserten Spülbarkeit des Druckkopfs, weil die flexible Membran auf ihrer Beschichtungsmittelseite kaum Ansatzpunkte für Beschichtungsmittelablagerungen bietet. Damit verbunden ist auch der Vorteil eines schnelleren Farbwechsels, da der Spülvorgang kürzer ist.

Darüber hinaus können mit dem erfindungsgemäßen Druckkopf auch Zwei- oder Mehrkomponentenlacke appliziert werden.

Ferner wird die Prozesssicherheit erhöht und die Leckagesicherheit verbessert.

Schließlich ist für das Bewegen des beweglichen Ventilelements auch eine geringere Antriebsleistung erforderlich.

In einem Ausführungsbeispiel der Erfindung weist der Drucckopf nicht nur eine einzige Auslassöffnung mit einem einzigen Ventilelement auf, sondern mehrere Auslassöffnungen mit jeweils einem beweglichen Ventilelement und jeweils einem Ventilantrieb.

In einer Variante dieses Ausführungsbeispiels ist hierbei jedem Ventilantrieb jeweils eine flexible Membran zugeordnet, um den Ventilantrieb abzutrennen.

In einer anderen Variante dieses Ausführungsbeispiels ist dagegen eine gemeinsame, durchgehende, flexible Membran vorgesehen, welche die Ventilantriebe gemeinsam gegenüber der Beschichtungsmittelzuführung abtrennt. Diese durchgehende Membran kann an einzelnen Stellen (z.B. zwischen jedem Ventilantrieb) an der oberen Kanalwand anliegen, befestigt sein oder durchgängig von der oberen Kanalwand beabstandet sein.

Weiterhin ist zu erwähnen, dass der Druckkopf eine Rückstellfeder (z.B. Spiralfeder) vorsehen kann, um die flexible Membran in ihre Ruhestellung zu drücken, wobei die Ruhestellung vorzugsweise die Schließstellung ist, in der das bewegliche Ventilelement die Auslassöffnung verschließt.

Zusätzlich zu dieser Rückstellfeder oder anstelle der Rückstellfeder kann die Membran elastisch federnd ausgebildet sein, wobei die Membran dann zusätzlich die Funktion einer Rückstellfeder erfüllt.

Das bewegliche Ventilelement (z.B. Ventilnadel) kann also sowohl durch die Rückstellfeder als auch durch die elastische Membran in die Ruhestellung gedrückt werden.

Alternativ besteht die Möglichkeit, dass auf die übliche Rückstellfeder verzichtet wird und dann nur die elastische Membran die Funktion der Rückstellfeder übernimmt.

Weiterhin ist in diesem Zusammenhang zu erwähnen, dass die Ruhestellung vorzugsweise die Schließstellung ist, in der das bewegliche Ventilelement die Auslassöffnung verschließt. Es ist jedoch alternativ auch möglich, dass die Ruhestellung die Öffnungsstellung ist, in der das bewegliche Ventilelement die Auslassöffnung freigibt. Die flexible Membran kann also das bewegliche Ventilelement aufgrund ihrer Federkraft wahlweise in die Schließstellung oder in die Öffnungsstellung drücken, was von der konstruktiven Gestaltung des Druckkopfs abhängt.

Ferner besteht im Rahmen der Erfindung die Möglichkeit, dass die Membran selbst magnetisch oder magnetisierbar ist oder partiell magnetisch oder magnetisierbar ist oder im Aktionsbereich des Magnetantriebs zum Beispiel durch mit der Membran verbundene Elemente magnetisch oder magnetisierbar ist und von einem Magnetantrieb angetrieben wird, der die magnetische Membran in Abhängigkeit von seiner Polarität entweder anzieht oder abstößt. Die Magnetwirkung der Membran kann beispielsweise dadurch erreicht werden, dass die Membran Magnetpartikel enthält, um die Membran magnetisch zu machen.

Es wurde bereits vorstehend kurz erwähnt, dass der Druckkopf eine verschiebbare Ventilnadel aufweisen kann, um das bewegliche Ventilelement zwischen der Öffnungsstellung und der Schließstellung zu bewegen. Die Ventilnadel kann hierbei einen beweglichen Anker in einem Magnetaktor bilden.

In einem Ausführungsbeispiel der Erfindung ist diese Ventilnadel fest mit der Membran und dem Ventilelement verbunden, so dass die Verschiebung der Ventilnadel zwangsläufig zu einer entsprechenden Auslenkung der Membran und des Ventilelementes führt.

Ferner ist zu erwähnen, dass sich das Ventilelement und/oder die Ventilnadel vorzugsweise vollständig auf der Antriebsseite der Membran befinden und durch die Membran von der Beschichtungsmittelzuführung getrennt werden. Dies ist vorteilhaft, weil die Membran dann beschichtungsmittelseitig völlig glatt ausgebildet sein kann und deshalb keine Ansatzpunkte für Beschichtungsmittelablagerungen bildet.

Es besteht jedoch alternativ auch die Möglichkeit, dass das Ventilelement und/oder die Ventilnadel mit einem Teil beschichtungsmittelseitig und mit einem anderen Teil antriebsseitig bezüglich der Membran angeordnet sind, so dass die Membran die beiden Teile voneinander trennt. Diese Erfindungsvariante kann konstruktiv vorteilhaft sein, zum Beispiel, um einen größeren Strömungsquerschnitt für das Beschichtungsmittel zu erzielen.

Darüber hinaus kann das Ventilelement zum Verschließen bzw. Freigeben der Auslassöffnung eine Noppe auf der Beschichtungsmittelseite der Membran aufweisen, wobei diese Noppe dann die Auslassöffnung freigibt bzw. verschließt.

In einem Ausführungsbeispiel der Erfindung ist diese Noppe einstückig an die Membran auf der Auslassseite der Membran angeformt.

Weiterhin ist in diesem Zusammenhang zu erwähnen, dass die Noppe vorzugsweise konzentrisch und kongruent zu der Auslassöffnung geformt ist, um die Auslassöffnung dichtend verschließen zu können.

In einer Variante der Erfindung ist der Ventilantrieb ein Fluidantrieb, der eine flexible Antriebsmembran antriebsseitig mit einem einstellbaren Fluiddruck beaufschlagt, um die Antriebsmembran auszulenken, um damit das Ventilelement zwischen der Öffnungsstellung und der Schließstellung zu bewegen. Beispielsweise kann es sich bei dem Fluidantrieb um einen Hydraulikantrieb oder einen Pneumatikantrieb handeln, der die Antriebsmembran mit einer Hydraulikflüssigkeit bzw. mit Druckluft beaufschlagt.

Die vorstehend erwähnte Antriebsmembran kann im Rahmen der Erfindung zusätzlich zu der eingangs erwähnten flexiblen Membran vorgesehen sein oder diese Membran bilden. Der erfindungsgemäße Druckkopf kann also zwei Membranen für Abdichtung und Antrieb oder eine einzige Membran für Abdichtung und Antrieb aufweisen.

Zu der Membran ist zu erwähnen, dass die Membran vorzugsweise sehr dünn ist und deshalb vorzugsweise eine Dicke von weniger als 0,5mm, 0,1mm, 0,05mm oder sogar weniger als 0,01mm aufweist.

Zu dem Druckkopf ist allgemein zu bemerken, dass der Drucckopf vorzugsweise einen hohen Auftragswirkungsgrad von mindestens 80%, 90%, 95% oder sogar mindestens 99% aufweist, so dass nahezu das gesamte applizierte Beschichtungsmittel vollständig auf dem zu beschichtenden Bauteil abgelagert wird, ohne dass Overspray entsteht.

Für einen Einsatz bei der Serienlackierung von Kraftfahrzeugkarosseriebauteilen ist es weiterhin vorteilhaft, wenn der Druckkopf eine ausreichende Flächenbeschichtungsleistung aufweist, die vorzugsweise mindestens 0,5m²/min, 1m²/min, 2m²/min oder sogar mindestens 3m²/min beträgt.

Hinsichtlich des Materials für die Membran bestehen im Rahmen der Erfindung verschiedene Möglichkeiten. Beispielsweise kann eine Metallfolie verwendet werden oder eine Membran aus einem Polymermaterial, wie beispielsweise Polytetrafluorethylen (PTFE), Nitrilkautschuk (NBR), Fluorelastomere (z.B. Perfluorkautschuk (FFKM) oder Fluorkautschuk (FKM), Polyurethan (PU), Perfluoralkoxy-Polymer (PFA), Polyester (PE), Polyamid, Polyethylen (PE), Polypropylen (PP), Polyoxymethylen (POM). Ferner besteht auch die Möglichkeit, dass die Membran eine mikroporöse Membran ist.

In einer Variante der Erfindung gibt der Druckkopf einen Tröpfchenstrahl aus im Gegensatz zu einem in Strahllängsrichtung zusammenhängenden Beschichtungsmittelstrahl. In einer anderen Variante der Erfindung gibt der Druckkopf dagegen einen in Strahllängsrichtung zusammenhängenden Beschichtungsmittelstrahl ab im Gegensatz zu einem Tröpfchenstrahl.

Darüber hinaus ist zu bemerken, dass die Erfindung nicht nur Schutz beansprucht für den vorstehend beschriebenen erfindungsgemäßen Druckkopf als einzelnes Bauteil. Vielmehr beansprucht die Erfindung auch Schutz für eine komplette Beschichtungseinrichtung mit mindestens einem solchen Drucckopf, der vorzugsweise von einem mehrachsigen Beschichtungsroboter mit einer seriellen und/oder parallelen Roboterkinematik über die Oberfläche des zu beschichtenden Bauteils bewegt wird.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine schematische Darstellung eines Druckkopfs mit mehreren Düsen mit jeweils einem Ventilantrieb und einer durchgehenden gemeinsamen Membran,
- Figur 2: eine Abwandlung von Figur 1, wobei jedem Ventilantrieb eine separate Membran zugeordnet ist,
- Figur 3: eine schematische Darstellung eines erfindungsgemäßen Druckkopfs, wobei die Membran auch die Funktion einer Rückstellfeder erfüllt,
- Figur 4: eine Abwandlung von Figur 3, wobei der Anker keine Ventilnadel bildet und die Membran Magnetpartikel enthält,
- Figur 5: eine Abwandlung, wobei der Ventilantrieb vollständig auf der Antriebsseite der Membran angeordnet ist,
- Figur 6: eine Abwandlung, bei der ein Teil des Ventilantriebs auch beschichtungsmittelseitig angeordnet ist,
- Figur 7: eine Abwandlung mit einer zusätzlichen Noppe zum Abdichten der Auslassöffnung,
- Figur 8: eine Abwandlung mit einem hydraulischen Antrieb.
- Figur 9: eine weitere Abwandlung.

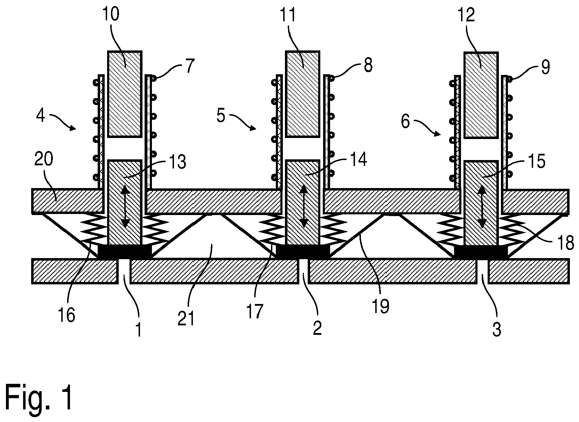

Figur 1 zeigt eine schematische Darstellung eines erfindungsgemäßen Druckkopfs, der beispielsweise zur Lackapplikation bei der Serienlackierung von Kraftfahrzeugkarosseriebauteilen in einer Lackieranlage eingesetzt werden kann, wobei der Druckkopf von einem mehrachsigen Lackierroboter mit einer seriellen Roboterkinematik geführt wird.

Der Druckkopf weist in einer Düsenplatte mehrere Düsen 1, 2, 3 auf, um den Lack auf die Bauteiloberfläche des zu lackierenden Bauteils zu applizieren, wobei aus den Düsen 1-3 jeweils ein räumlich eng begrenzter Lackstrahl (zusammenhängend oder in Form von Tropfen) ausgegeben wird. Zur Vereinfachung sind in der Zeichnung nur die drei Düsen 1-3 dargestellt. Tatsächlich weist der Druckkopf jedoch in der Praxis eine größere Anzahl von Düsen auf.

Jeder der Düsen 1-3 ist jeweils ein Steuerventil 4, 5 bzw. 6 zugeordnet, um die Düsen 1-3 entweder zu öffnen oder zu verschließen.

Die einzelnen Steuerventile 4-6 weisen jeweils eine Spule 7, 8 bzw. 9 auf, in der ein Spulenkern 10, 11 bzw. 12 ist.

Darüber hinaus weisen die Steuerventile 4-6 jeweils einen verschiebbaren Anker 13, 14 bzw. 15 auf, der eine Ventilnadel bildet, wobei die Anker 13-15 in Abhängigkeit von der Bestromung der zugehörigen Spule 7-9 verschoben werden.

Die Anker 13-15 werden durch jeweils eine Rückstellfeder 16, 17, 18 in der Zeichnung nach unten in die Schließstellung gedrückt, in der die Düsen 1-3 verschlossen sind.

Schließlich weist der Druckkopf noch eine flexible, durchgehende Membran 19 auf, die zwischen den Steuerventilen 4-6 jeweils an einer oberen Kanalwand 20 einer Beschichtungsmittelzuführung 21 befestigt ist. Diese durchgehende Membran 19 kann an einzelnen Stellen (z.B. zwischen jedem Ventilantrieb) an der oberen Kanalwand 20 anliegen, befestigt sein oder durchgängig von der oberen Kanalwand 20 beabstandet sein. Zwischen diesen Befestigungspunkten kann die Membran 19 dagegen nach unten ausgelenkt werden. Die Membran 19 trennt hierbei die Beschichtungsmittelzuführung 21 von dem Steuerventil 4-6. Dies ist vorteilhaft, weil dadurch Beschichtungsmittelablagerungen an den Steuerventilen 4-6 vermieden werden.

Zur Lackapplikation werden die Steuerventile 4-6 so mit Strom angesteuert, dass der Anker 13-15 entgegen der Kraft der Rückstellfeder 16-18 nach oben gezogen wird, wodurch die Anker 13-15 die Düsen 1-3 freigeben. In dieser angehobenen Öffnungsstellung kann dann Lack aus der Beschichtungsmittelzuführung 21 durch die Düsen 1-3 austreten.

Ohne eine Bestromung der Spulen 7-9 drückt die Rückstellfeder 16-18 die Anker 13-15 dagegen in der Zeichnung nach unten, so dass die Anker 13-15 die Düsen 1-3 versperren und dadurch die Lackabgabe abschalten.

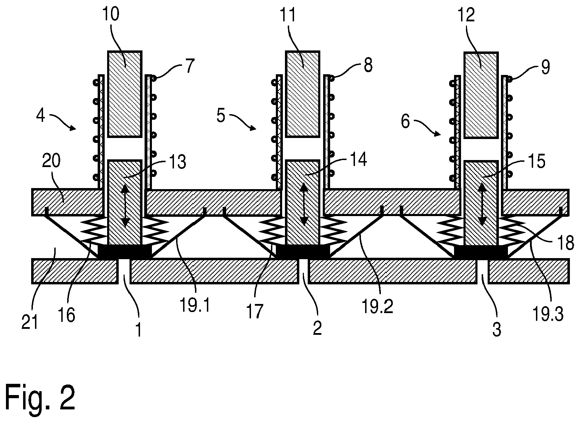

Figur 2 zeigt eine Abwandlung von Figur 1, so dass zur Vermeidung von Wiederholungen auf die vorstehende Beschreibung Bezug genommen wird, wobei für entsprechende Einzelheiten dieselben Bezugszeichen verwendet werden.

Eine Besonderheit dieses Ausführungsbeispiels besteht darin, dass anstelle der durchgehenden Membran 19 drei getrennte Membranen 19.1, 19.2, 19.3 für die einzelnen Steuerventile 4-6 vorgesehen sind.

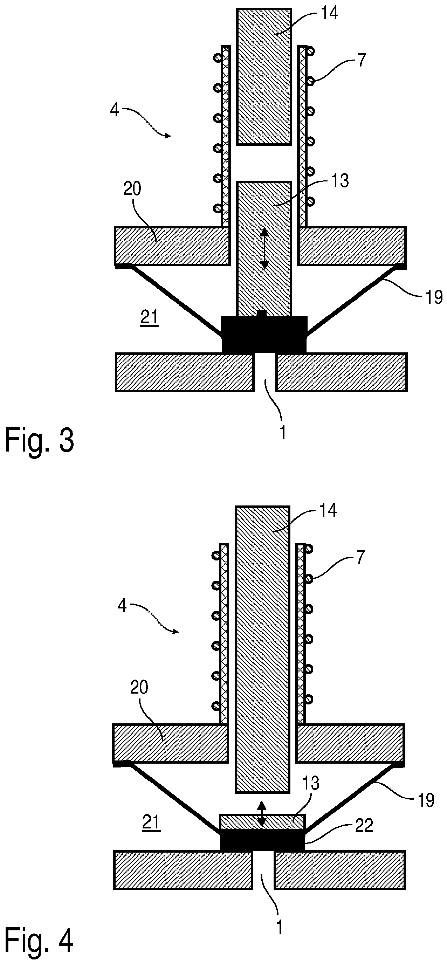

Figur 3 zeigt eine schematische Darstellung einer Abwandlung, die ebenfalls weitgehend mit dem vorstehend beschriebenen Ausführungsbeispiel übereinstimmt, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Rückstellfeder 16 weggelassen ist und stattdessen die Membran 19 die Funktion der Rückstellefeder 16 erfüllt.

Figur 4 zeigt eine weitere Abwandlung, die ebenfalls weitgehend mit dem vorstehend beschriebenen Ausführungsbeispiel übereinstimmt, so dass zur Vermeidung von Wiederholungen auf die vorstehende Beschreibung verwiesen wird.

Eine Besonderheit dieses Ausführungsbeispiels besteht darin, dass der Anker 13 hierbei keine Ventilnadel bildet.

Darüber hinaus enthält die Membran 19 hierbei Magnetpartikel 22, um die magnetische Ansteuerung zu unterstützen.

Ferner hinaus erfüllt die Membran 19 auch in diesem Ausführungsbeispiel die Funktion der Rückstellfeder 16, die somit weggelassen ist.

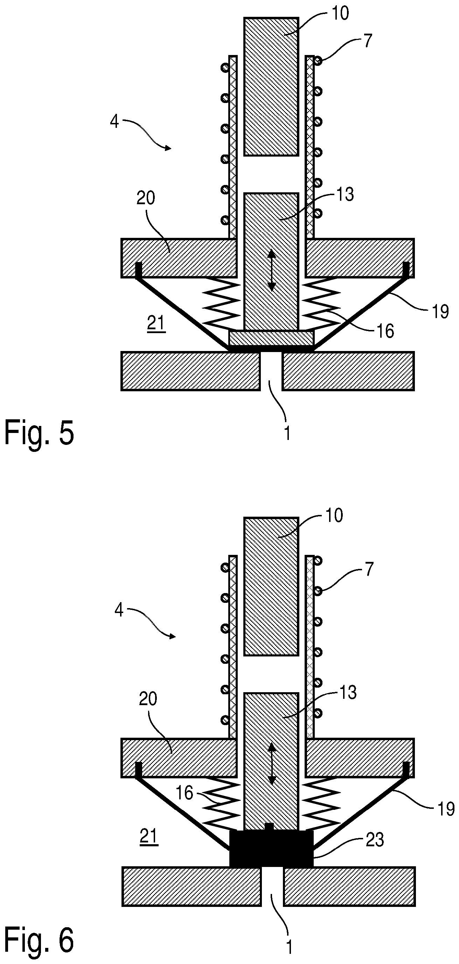

Figur 5 zeigt eine weitere Abwandlung, die wiederum teilweise mit den vorstehend beschriebenen Ausführungsbeispielen übereinstimmt, so dass zur Vermeidung von Wiederholungen auf die vorstehende Beschreibung Bezug genommen wird, wobei für entsprechende Einzelheiten dieselben Bezugszeichen verwendet werden.

Eine Besonderheit dieses Ausführungsbeispiels besteht darin, dass das Steuerventil 4 hierbei vollständig auf der Antriebsseite der Membran 19 angeordnet ist. Dies bedeutet, dass die Membran 19 auf der Beschichtungsmittelseite vollständig glatt ist und deshalb keinerlei Ansatzpunkte für Beschichtungsmittelablagerungen bietet. Dies erleichtert die Entfernung von Lackresten bei einem Spülvorgang.

Figur 6 zeigt eine Abwandlung von Figur 5, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass ein Teil 23 des Ankers 13 auf der Beschichtungsmittelseite der Membran 19 angeordnet ist, was konstruktive Vorteile haben kann.

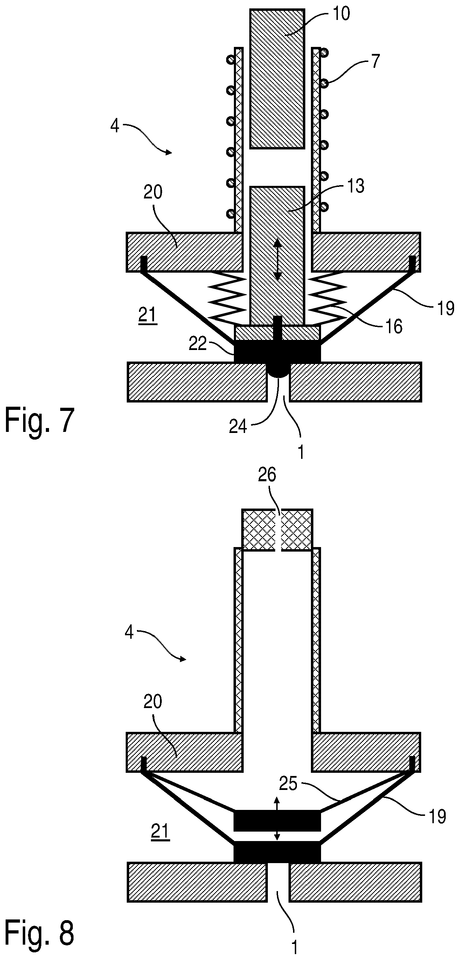

Ferner zeigt Figur 7 eine weitere Abwandlung, so dass zur Vermeidung von Wiederholungen wieder auf die vorstehende Beschreibung verwiesen wird, wobei für entsprechende Einzelheiten dieselben Bezugszeichen verwendet werden.

Eine Besonderheit dieses Ausführungsbeispiels besteht darin, dass auf der Beschichtungsmittelseite der Membran 19 eine Noppe 24 angeordnet ist, die in der Schließstellung die Düse 1 verschließt. Die Noppe 24 ist deshalb konzentrisch und kongruent zu der Düse 1 angeordnet.

Weiterhin zeigt Figur 8 ein weiteres Ausführungsbeispiel, das wieder weitgehend mit den vorstehend beschriebenen Ausführungsbeispielen übereinstimmt, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht in einem hydraulischen Ventilantrieb.

Hierzu ist eine weitere Membran 25 vorgesehen, die über eine Hydraulikzuleitung 26 mit Hydraulikflüssigkeit beaufschlagt werden kann, um die Membran 25 und damit auch die Membran 19 nach unten auszulenken und dadurch die Düse 1 zu verschließen.

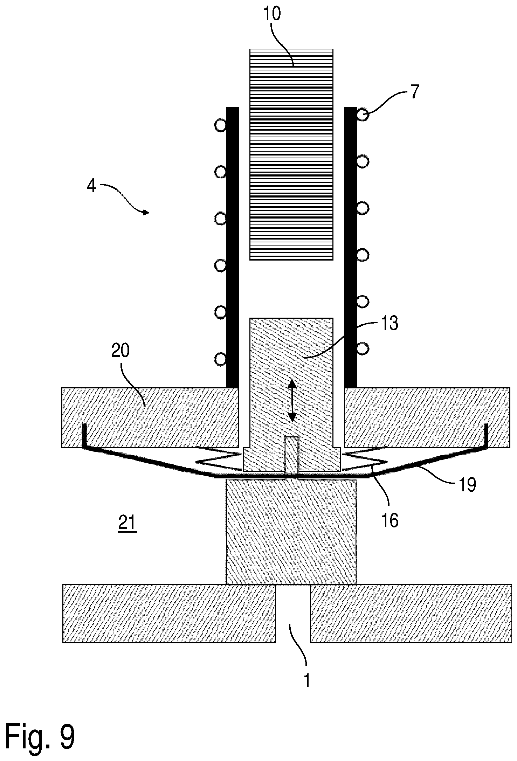

Schließlich zeigt Figur 9 ein weiteres Ausführungsbeispiel, das wieder weitgehend mit den vorstehend beschriebenen Ausführungsbeispielen übereinstimmt, so dass zur Vermeidung von Wiederholungen auf die vorstehende Beschreibung verwiesen wird, wobei für entsprechende Einzelheiten dieselben Bezugszeichen verwendet werden.

Dieses Ausführungsbeispiel weist auf der Medienseite einen verlängerten Stößel (Anker 13) auf. Dabei wird die Membran 19 nur geringfügig ausgelenkt. Vorteil ist ein größerer Strömungsquerschnitt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von den Erfindungsgedanken Gebrauch machen und deshalb in den Schutzbereich fallen. Insbesondere beansprucht die Erfindung auch Schutz für den Gegenstand und die Merkmale der Unteransprüche unabhängig von den jeweils in Bezug genommenen Ansprüchen und insbesondere auch ohne die Merkmale des Hauptanspruchs. Die Erfindung umfasst also verschiedene Erfindungsaspekte, die unabhängig voneinander Schutz genießen. Besonders ist zu erwähnen, dass die Erfindung auch Varianten umfasst, bei denen die Membran nicht als Metallfolie ausgebildet ist.

### Bezugszeichenliste

- 1-3: Düsen
- 4-6: Steuerventil
- 7-9: Spule
- 10-12: Spulenkern
- 13-15: Anker (Ventilnadel)
- 16-18: Rückstellfeder
- 19: Gemeinsame Membran
- 19.1-19.3: Membranen der einzelnen Steuerventile
- 20: Obere Kanalwand der Beschichtungsmittelzuführung
- 21: Beschichtungsmittelzuführung
- 22: Magnetpartikel
- 23: Teil auf der Beschichtungsmittelseite der Membran
- 24: Noppe zum Abdichten der Düse
- 25: Membran des Hydraulikantriebs
- 26: Hydraulikzuleitung

## Patentansprüche

1. Druckkopf zur Applikation eines Beschichtungsmittels auf ein Bauteil, insbesondere zur Applikation eines Lacks auf ein Kraftfahrzeugkarosseriebauteil, mit
a) mindestens einer Auslassöffnung (1-3) zur Abgabe des Beschichtungsmittels,
b) einer Beschichtungsmittelzuführung (21) zur Zuführung des Beschichtungsmittels zu der Auslassöffnung (1-3),
c) einem beweglichen Ventilelement (13-15), das zwischen einer Öffnungsstellung und einer Schließstellung beweglich ist, wobei das Ventilelement (13-15) in der Schließstellung die Auslassöffnung (1-3) verschließt, wohingegen das Ventilelement (13-15) in der Öffnungsstellung die Auslassöffnung (1-3) freigibt, und
d) einem Ventilantrieb (7-15) zum Bewegen des Ventilelements (13-15) zwischen der Öffnungsstellung und der Schließstellung,
**gekennzeichnet durch**
e) eine flexible Membran (19, 19.1-19.4), die den Ventilantrieb (7-15) von der Beschichtungsmittelzuführung (21) trennt, wobei die Membran (19, 19.1-19.4) mit ihrer Antriebsseite dem Ventilantrieb (7-15) zugewandt ist und mit ihrer Beschichtungsmittelseite dem Beschichtungsmittel in der Beschichtungsmittelzuführung (21) ausgesetzt ist,
f) wobei die Membran (19, 19.1-19.4) eine Metallfolie ist.

2. Druckkopf nach Anspruch 1, **dadurch gekennzeichnet,**
a) **dass** der Druckkopf mehrere Auslassöffnungen (1-3) mit jeweils einem beweglichen Ventilelement (13-15) aufweist, und
b) **dass** jedem beweglichen Ventilelement (13-15) jeweils eine eigene flexible Membran (19.1-19.4) zugeordnet ist, die den Ventilantrieb (7-15) des jeweiligen Ventilelements (13-15) von der Beschichtungsmittelzuführung (21) trennt.

3. Druckkopf nach Anspruch 1, **dadurch gekennzeichnet,**
a) **dass** der Druckkopf mehrere Auslassöffnungen (1-3) mit jeweils einem beweglichen Ventilelement (13-15) aufweist, und
b) **dass** den Ventilelementen eine gemeinsame, durchgehende, flexible Membran (19) zugeordnet ist, welche die Beschichtungsmittelzuführung (21) von den jeweiligen Ventilantrieben (7-15) trennt.

4. Druckkopf nach einem der vorhergehenden Ansprüche, **dadurch gekennzeichnet,**
a) **dass** eine Rückstellfeder (16-18) vorgesehen ist, insbesondere eine Spiralfeder, um die Membran (19, 19.1-19.4) in ihre Ruhestellung zu drücken, wobei die Ruhestellung vorzugsweise die Schließstellung ist, und/oder
b) **dass** die Membran (19, 19.1-19.4) elastisch ist und eine Rückstellfeder bildet, welche das bewegliche Ventilelement (13-15) in ihre Ruhestellung drückt, wobei die Ruhestellung vorzugsweise die Schließstellung ist.

5. Druckkopf nach einem der vorhergehenden Ansprüche, **dadurch gekennzeichnet,**
a) **dass** die Membran (19, 19.1-19.4) magnetisch oder magnetisierbar ist und der Ventilantrieb (7-15) einen Magnetantrieb aufweist, der die magnetische oder magnetisierbare Membran (19, 19.1-19.4) entweder anzieht oder abstößt,
b) **dass** die Membran (19, 19.1-19.4) vorzugsweise Magnetische oder magnetisierbare Partikel (22) enthält, um die Membran (19, 19.1-19.4) magnetisch zu machen oder durch einen Magneten auszulenken.

6. Druckkopf nach einem der vorhergehenden Ansprüche, **gekennzeichnet durch** eine verschiebbare Ventilnadel (13-15) zum Bewegen des Ventilelements (13-15) zwischen der Öffnungsstellung und der Schließstellung, wobei die Ventilnadel (13-15) vorzugsweise einen verschiebbaren Anker eines Magnetaktors bildet.

7. Druckkopf nach Anspruch 6, **dadurch gekennzeichnet, dass** die Ventilnadel (13-15) fest mit der Membran (19, 19.1-19.4) und dem Ventilelement (13-15) verbunden ist, so dass eine Verschiebung der Ventilnadel (13-15) zwangsläufig zu einer entsprechenden Auslenkung der Membran (19, 19.1-19.4) und des Ventilelements (13-15) führt.

8. Druckkopf nach einem der vorhergehenden Ansprüche, **dadurch gekennzeichnet,**
a) **dass** sich das Ventilelement (13-15) und/oder die Ventilnadel (13-15) vollständig auf der Antriebsseite der Membran (19, 19.1-19.4) befinden und durch die Membran (19, 19.1-19.4) von der Beschichtungsmittelzuführung (21) getrennt werden, oder
b) **dass** sich das Ventilelement (13-15) und/oder die Ventilnadel mit einem Teil (23) in der Beschichtungsmittelzuführung (21) und mit einem anderen Teil auf der Antriebsseite der Membran (19, 19.1-19.4) befinden, wobei die Membran (19, 19.1-19.4) die beiden Teile voneinander trennt.

9. Druckkopf nach einem der vorhergehenden Ansprüche, **dadurch gekennzeichnet,**
a) **dass** das Ventilelement (13-15) eine Noppe (24) auf der Beschichtungsmittelseite der Membran (19, 19.1-19.4) aufweist, und/oder
b) **dass** das Ventilelement (13-15) einstückig an die Membran (19, 19.1-19.4) angeformt ist auf der Auslassseite der Membran (19, 19.1-19.4), insbesondere als Noppe auf der auslassseitigen Oberfläche der Membran (19, 19.1-19.4).

10. Druckkopf nach Anspruch 9, **dadurch gekennzeichnet,**
a) **dass** die Noppe (24) auf der Auslassseite der Membran (19, 19.1-19.4) konzentrisch zu der Auslassöffnung (1-3) geformt ist, und/oder
b) **dass** die Noppe (24) auf der Auslassseite der Membran (19, 19.1-19.4) kongruent zur Form der Auslassöffnung (1-3) geformt ist.

11. Druckkopf nach einem der vorhergehenden Ansprüche, **dadurch gekennzeichnet,**
a) **dass** der Ventilantrieb (25, 26) ein Fluidantrieb ist, der eine flexible Antriebsmembran (25) antriebsseitig mit einem einstellbaren Fluiddruck beaufschlagt, um die Antriebsmembran (25) auszulenken und damit das Ventilelement (13-15) zwischen der Öffnungsstellung und der Schließstellung zu bewegen, und/oder
b) **dass** der Fluidantrieb (25, 26) ein Hydraulikantrieb (25, 26) oder ein Pneumatikantrieb ist.

12. Druckkopf nach Anspruch 11, **dadurch gekennzeichnet,**
a) **dass** die Antriebsmembran (25) zusätzlich zu der Membran (19, 19.1-19.4) vorgesehen ist oder
b) **dass** die Antriebsmembran die Membran (19, 19.1-19.4) bildet.

13. Druckkopf nach einem der vorhergehenden Ansprüche, **dadurch gekennzeichnet,**
a) **dass** die Auslassöffnung (1-3) eine Austrittsdüse des Druckkopfs ist, und/oder
b) **dass** die Membran (19, 19.1-19.4) eine Dicke von weniger als 0,5mm, 0,1mm, 0,05mm oder weniger als 0,01mm aufweist, und/oder
c) **dass** der Druckkopf einen eng begrenzten Beschichtungsmittelstrahl abgibt im Gegensatz zu einem Sprühnebel, und/oder
d) **dass** der Druckkopf einen Auftragswirkungsgrad von mindestens 80%, 90%, 95% oder 99% aufweist, so dass im Wesentlichen das gesamte applizierte Beschichtungsmittel vollständig auf dem Bauteil abgelagert wird, ohne dass Overspray entsteht, und/oder
e) **dass** der Druckkopf eine Flächenbeschichtungsleistung von mindestens 0,5 m²/min, 1m²/min, 2m²/min oder mindestens 3m²/min aufweist, und/oder
f) **dass** der Ventilantrieb (7-15) einen Magnetaktor (7-15) oder einen Piezoaktor aufweist, und/oder
g) **dass** die Membran (19, 19.1-19.4) eine mikroporöse Membran (19, 19.1-19.4) ist.

14. Beschichtungseinrichtung zur Beschichtung von Bauteilen mit einem Beschichtungsmittel, insbesondere zur Lackierung von Kraftfahrzeugkarosseriebauteilen mit einem Lack, mit einem Applikationsgerät zur Applikation des Beschichtungsmittels auf das Bauteil, **dadurch gekennzeichnet, dass** das Applikationsgerät ein Druckkopf nach einem der vorhergehenden Ansprüche ist.

15. Beschichtungseinrichtung nach Anspruch 14, **gekennzeichnet durch** einen mehrachsigen Beschichtungsroboter mit einer seriellen und/oder parallelen Roboterkinematik zum Bewegen des Druckkopfs über die Oberfläche des zu beschichtenden Bauteils.
